# FASCICULE DE BREVET EUROPEEN

(11) **EP 3 945 168 B1**
(45) Date de publication et mention de la délivrance du brevet: **09.08.2023**
(21) Numéro de dépôt: 21187188.4
(22) Date de dépôt: 22.07.2021
(51) Int. Cl.: E03C 1/122, F16L 45/00

(54) **DISPOSITIF DE RACCORDEMENT D'UN ÉQUIPEMENT SANITAIRE À UNE CANALISATION**
VORRICHTUNG FÜR DEN ANSCHLUSS EINER SANITÄRAUSSTATTUNG AN EIN ABFLUSSROHR
DEVICE FOR CONNECTING SANITARY EQUIPMENT WITH A PIPE

(30) Priorité: 31.07.2020 FR 2008146
(43) Date de publication de la demande: 02.02.2022
(73) Titulaire: Wirquin Plastiques, 44470 Carquefou (FR)
(72) Inventeur: Le Coent, Daniel, 44470 Carquefou (FR); Bacouet, Alban, 44980 Sainte Luce sur Loire (FR)
(74) Mandataire: Lequien, Philippe

(56) Documents cités:
- DE-U1-202009 017 547
- FR-A- 445 872
- KR-A- 20120 110 255
- US-A- 3 346 887

## Description

Le domaine de l'invention est celui de la conception et de la fabrication des équipements sanitaires.

Plus précisément, l'invention concerne une conduite d'évacuation d'eaux usées. Les équipements sanitaires, tels que les WC ou les lavabos par exemple, sont raccordés à des canalisations d'évacuation d'eaux usées.

Pour cela, les éléments de canalisation, notamment des tubulures, sont utilisés. Selon certaines configurations d'installations existantes, la mise en oeuvre de coudes est parfois impérative pour permettre de relier l'équipement sanitaire aux canalisations.

Toutefois, lors d'un remplacement d'équipement sanitaire, il peut être nécessaire d'effectuer un changement de raccordement aux canalisations, ce qui peut être long et/ou coûteux.

En effet, il est connu que tous les équipements présentent leurs caractéristiques propres qui, par exemple en fonction de leur design respectif, sont différentes entre deux équipements sanitaires, notamment d'un point de vue de leur sortie d'évacuation.

A titre d'exemple, un premier WC peut présenter une sortie horizontale là où un deuxième WC peut présenter une sortie verticale.

Il en va de même pour les WC suspendus et les WC posés au sol qui, bien que pouvant présenter tous les deux des sorties horizontales, demandent un raccordement différent en fonction de la différence de hauteur de leur sortie par rapport à la canalisation.

Cela est également vérifié pour le raccordement d'un équipement à un bâtiment neuf pré-équipé d'un réseau standardisé de canalisations, sans tenir compte des modèles d'équipements pouvant être installés ultérieurement.

Pour permettre un changement d'équipement facilité, des tubulures en forme de T sont par exemple utilisées.

Ces tubulures en T présentent alors trois orifices communiquant entre eux, dont seulement deux sont utilisés pour raccorder l'équipement sanitaire à la canalisation, l'un constituant par exemple un raccord horizontal à l'équipement sanitaire pour l'évacuation d'eau à partir de l'équipement, et l'autre formant un raccord vertical à une conduite de chute d'eau. Le troisième orifice, généralement en position supérieure par rapport aux deux autres, peut être obturé par un bouchon (vissé par exemple) pour former un regard.

En fonctionnement, lors de l'évacuation des eaux usées, il est fréquent que des saletés viennent se loger dans le troisième orifice non utilisé mais obturé par un bouchon.

Or, cela peut provoquer un bouchon de saletés à l'intérieur de la tubulure et empêcher l'accès à l'intérieur de la tubulure lors des phases de maintenance, via le troisième orifice.

Selon une autre utilisation, la tubulure en T est intercalée sur une conduite de chute d'eau, et permet l'écoulement entre un orifice supérieur et un orifice inférieur de la tubulure en T, le troisième orifice formant un moyen pour raccorder une évacuation d'eau (provenant d'un équipement sanitaire) à la conduite de chute d'eau.

Dans ce cas, l'écoulement d'eau en provenance de l'orifice supérieur peut générer un encrassement de l'orifice de raccordement à l'équipement sanitaire.

Il est également possible que l'écoulement provenant de l'orifice supérieur interfère avec l'écoulement provenant de l'équipement sanitaire.

Dans le domaine de l'invention, on connaît également le document publié sous le numéro KR 2012 0110255 A et le document publié sous le numéro US 3 346 877 A qui traitent d'organe de réseaux d'évacuation d'eau, le document FR 445 872 A qui traite d'un dispositif pour capter, dans un embranchement, partie de la vapeur d'échappement ou de tout autre fluide s'écoulant dans un conduit principal, et le document DE 20 2009 017547 U1 qui traite d'un ensemble d'évacuation d'eau.

L'invention a notamment pour objectif de palier les inconvénients de l'art antérieur. Plus précisément, l'invention a pour objectif de proposer une solution permettant de faciliter le raccordement d'un équipement à une canalisation indépendamment que l'équipement présente une sortie d'évacuation horizontale ou verticale.

L'invention a également pour objectif de fournir une telle solution qui ne demande pas un changement drastique des pratiques actuelles.

L'invention a de plus pour objectif de fournir une telle solution qui assure l'accessibilité à l'intérieur de la conduite et/ou de la canalisation pour la maintenance.

L'invention a en outre pour objectif de permettre le raccordement d'un équipement à une colonne d'évacuation sans qu'un écoulement dans ladite canalisation n'empêche l'évacuation d'eau usée dudit équipement.

Ces objectifs, ainsi que d'autres qui apparaîtront par la suite, sont atteints grâce à l'invention qui a pour objet un dispositif de raccordement d'un équipement sanitaire à une canalisation, le dispositif comprenant une tubulure en forme de T, présentant :
- un premier orifice ;
- un deuxième orifice ;
- un troisième orifice débouchant dans la tubulure entre le premier orifice et le deuxième orifice,
dans lequel le dispositif comprend un organe déflecteur comprenant :
- une partie de butée destinée à être montée dans le premier orifice ou le troisième orifice,
- une paroi déflectrice prolongeant la partie de butée et pénétrant dans la
   tubulure, la paroi déflectrice formant un guide d'écoulement d'eau provenant de l'équipement sanitaire depuis le premier orifice uniquement, vers le troisième orifice
   caractérisé en ce que l'organe déflecteur présente un jambage faisant saillie de la paroi déflectrice et venant en appui contre une paroi de la tubulure.

Un tel organe déflecteur permet ainsi de transformer un élément en T, c'est-à-dire une tubulure en T en un coude d'évacuation d'eaux usées.

En effet, en insérant l'organe déflecteur dans le premier orifice, cela permet de guider, par la présence de la paroi déflectrice, un flux d'eau circulant dans la tubulure depuis le premier orifice directement vers le troisième orifice.

Bien entendu, indépendamment de son insertion dans le premier orifice ou le deuxième orifice, l'organe déflecteur permet, dans tous les cas, de transformer le T en un coude.

Le deuxième orifice devient alors un orifice inutilisé pour l'évacuation des eaux usées mais permet, toutefois, un accès à la canalisation pour sa maintenance.

Par ailleurs, la position du premier orifice et du deuxième orifice peut être interchangée de manière à assurer une réversibilité du montage et notamment de pouvoir adapter le raccord à différents équipements sanitaires, différents les uns des autres.

En outre, l'organe déflecteur permet d'assurer une bonne évacuation des eaux usées de l'équipement sanitaire même lorsqu'il est relié à une colonne d'évacuation dans laquelle un flux d'eaux usées circule.

En effet, lorsqu'un flux d'eaux usées circule dans une colonne d'évacuation, il peut empêcher toute évacuation des eaux d'un équipement raccordé à la colonne.

Cela s'explique notamment par le fait que le flux d'eaux usées circulant dans la colonne présente un débit supérieur à celui évacué de l'équipement, ce qui empêche tout autre flux avec un débit inférieur de pénétrer dans la colonne d'évacuation.

L'organe déflecteur permet ainsi de créer une voie d'entrée dans la colonne d'évacuation pour le flux d'eaux usées provenant de l'équipement sanitaire, cela malgré l'écoulement d'un flux à fort débit dans la canalisation.

L'organe déflecteur permet également d'éviter que des saletés contenues dans le flux d'eaux usées circulant dans la canalisation ne viennent obturer le premier orifice, ce qui empêcherait une évacuation correcte des eaux usées de l'équipement sanitaire.

Le jambage permet ainsi de maintenir en position la paroi déflectrice et donc d'assurer un bon guidage des eaux usées depuis le premier orifice vers le troisième orifice.

Préférentiellement, la tubulure présente un épaulement de réception de la partie de butée de l'organe déflecteur.

Cela permet de faciliter le montage et la retenue de l'organe déflecteur à l'intérieur de la tubulure.

Avantageusement, la partie de butée de l'organe déflecteur est ajourée pour autoriser un passage d'air.

Cela permet, en utilisant le deuxième orifice comme un orifice d'entrée d'air, de permettre l'insertion d'air dans l'écoulement des eaux usées depuis le premier orifice vers le troisième orifice, cela afin d'éviter toute surpression dans la canalisation et ainsi d'éviter d'empêcher tout désiphonage.

Préférentiellement, l'organe déflecteur est configuré pour maintenir écartée la paroi déflectrice de la tubulure.

Ce jambage assure de conserver en toutes circonstances, ou quasiment, un passage d'air d'un côté opposé de la paroi déflectrice à celui par lequel l'eau usée circule.

Ainsi, la capacité de fonctionnement du dispositif de raccordement s'en trouve améliorée.

Selon une forme particulièrement avantageuse, le jambage se présente sous une forme annulaire présentant au moins une partie complémentaire de la forme de la tubulure.

Cela permet ainsi de faciliter à la fois l'insertion et le maintien en position de l'organe déflecteur dans la tubulure. En outre, cela favorise le passage d'air en conservant, sur toute la paroi déflectrice, un écartement constant par rapport à la tubulure.

Préférentiellement, le dispositif de raccordement comprend un bouchon pour obturer le deuxième orifice.

Ce bouchon permet notamment d'éviter la remontée de mauvaises odeurs et leur dissipation dans l'atmosphère à l'extérieur de la tubulure du dispositif de raccordement.

Selon un aspect particulièrement avantageux, le bouchon présente une entrée d'air.

Cette entrée d'air permet de faciliter l'insertion d'air dans la tubulure pour favoriser l'écoulement des eaux usées depuis le premier orifice vers le troisième orifice et empêcher ainsi toute surpression dans la tubulure.

Le bouchon comprend de préférence une soupape souple formant clapet d'obturation de l'entrée d'air.

Ce clapet souple permet de faciliter et d'obtenir une entrée d'air de manière automatique par la simple dépression régnant dans la tubulure.

En effet, par effet venturi, les eaux usées qui circulent depuis le premier orifice vers le troisième orifice attirent la membrane souple vers l'intérieur de la tubulure pour permettre l'entrée d'air dans la tubulure.

Au contraire, lorsque l'eau ne s'écoule plus depuis le premier orifice vers le troisième orifice, la membrane souple, retrouve sa position pour obturer l'entrée d'air et ainsi éviter toute remontée de mauvaises odeurs hors de la tubulure.

Préférentiellement, la paroi déflectrice présente une concavité tournée vers l'intérieur de la tubulure.

Cette concavité permet de former une continuité dans la forme cylindrique de la tubulure pour limiter la perte de charge dans l'écoulement des eaux usées et ainsi fluidifier l'évacuation des eaux usées hors de l'équipement ou des équipements sanitaires.

La cavité de la paroi déflectrice est formée par au moins deux rayons de courbure perpendiculaires l'un par rapport à l'autre.

Cela permet ainsi former une paroi déflectrice bombée empêchant la retenue de saletés et favorisant l'évacuation fluide des eaux usées.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en coupe longitudinale d'un dispositif de raccordement d'un équipement sanitaire à une canalisation, selon l'invention, selon un premier mode de réalisation ;
- la figure 2 est une vue en coupe longitudinale du dispositif de raccordement d'un équipement sanitaire à une canalisation, selon l'invention, selon un deuxième mode de réalisation ;
- la figure 3 est une vue en perspective de dessous d'un organe de chemisage du dispositif de raccordement d'un équipement sanitaire à une canalisation, selon l'invention.

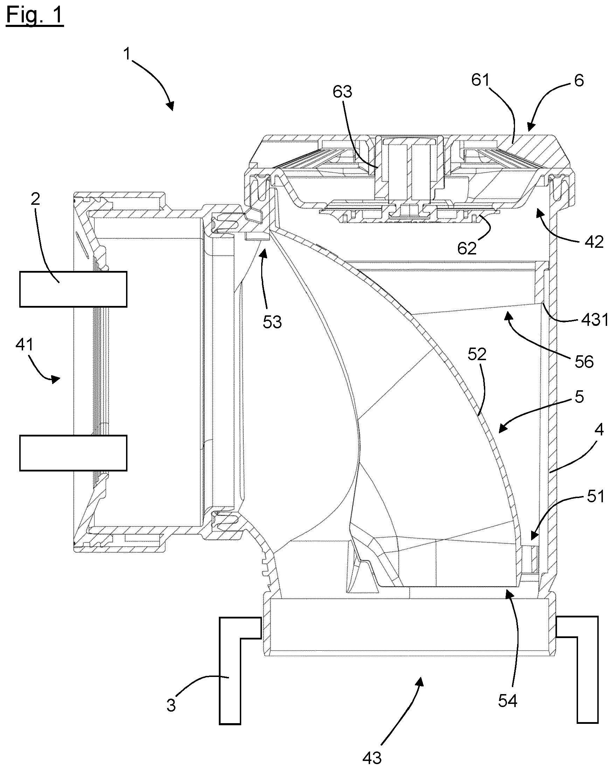

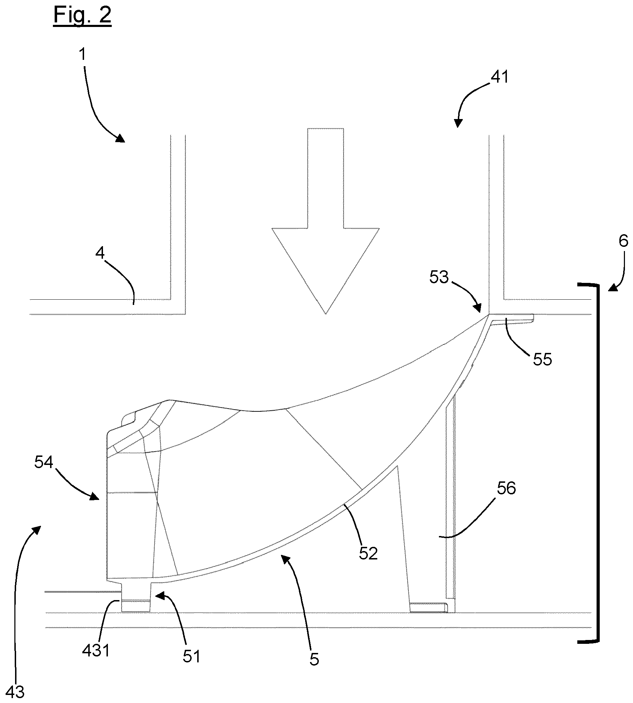

Les figures 1 et 2 illustrent respectivement un premier mode et un deuxième mode de réalisation d'un dispositif 1 de raccordement d'un équipement sanitaire 2 à une canalisation 3.

Le dispositif 1 comprend :
- une tubulure 4 ;
- un organe déflecteur 5.

Selon un mode de réalisation particulier, le dispositif 1 comprend également un bouchon 6 pour l'obturation partielle de la tubulure 4.

La tubulure 4 est du type en T, c'est-à-dire présentant :
- un premier orifice 41 ;
- un deuxième orifice 42 ;
- un troisième orifice 43 débouchant dans la tubulure 4 entre le premier orifice 41 et le deuxième orifice 42.

Le premier orifice 41 est destiné à être raccordé à l'équipement sanitaire 2, et le troisième orifice 43 est destiné à être raccordé à la canalisation 3, tel que cela est schématiquement illustré sur la figure 1.

Selon les modes de réalisation illustrés sur les figures, le premier orifice 41 et le deuxième orifice 42 ne sont pas coaxiaux, mais forment entre eux un angle sensiblement droit, c'est-à-dire sensiblement à 90°.

En revanche, le deuxième orifice 42 et le troisième orifice 43 sont coaxiaux l'un avec l'autre.

L'organe déflecteur 5 est destiné à être monté dans la tubulure 4 pour permettre de guider le flux d'eau usée depuis le premier orifice 41 vers le troisième orifice 43.

Pour cela, l'organe déflecteur 5 comprend :
- une partie de butée 51 ;
- une paroi déflectrice 52.

La paroi déflectrice 52 s'étend depuis une première extrémité 53 destinée à venir se loger dans le premier orifice 41 ou, à tout le moins, à son voisinage immédiat. La paroi déflectrice 52 permet ainsi de diriger les eaux usées évacuées de l'équipement sanitaire 2, depuis le premier orifice 41 vers le troisième orifice 43 uniquement.

La partie de butée 51 est ajourée pour permettre un passage d'air comme expliqué ci-après.

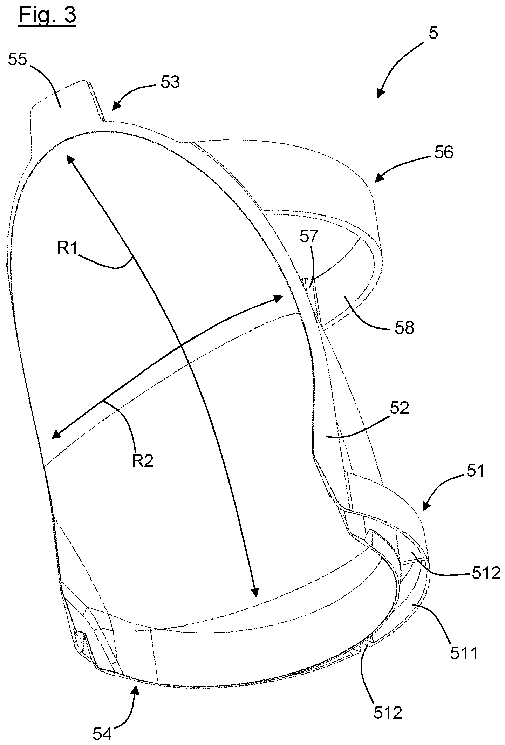

La paroi déflectrice présente, tel qu'illustré notamment sur la figure 3, une concavité destinée à être orientée vers l'intérieur de la tubulure 4.

Plus particulièrement, tel que cela est visible sur la figure 3, la concavité de la paroi déflectrice 52 de l'organe déflecteur 5 est tournée vers l'intérieur de la tubulure 4, et notamment vers le premier orifice 41 pour permettre de guider l'eau usée évacuée depuis le premier orifice 41 vers le troisième orifice 43.

En d'autres termes, la paroi déflectrice 52 permet d'éviter que l'eau usée évacuée, qui provient du premier orifice 41, ne puisse atteindre le deuxième orifice 42.

L'organe déflecteur 5 permet ainsi de transformer la forme en T de la tubulure 4 en une forme coudée puisque seuls deux orifices, à savoir le premier orifice 41 et le troisième orifice 43, sont utiles pour l'évacuation des eaux usées à l'instar d'un coude classique.

La concavité de la paroi déflectrice 52 est avantageusement formée par au moins deux rayons de courbure R1, R2 perpendiculaires l'un à l'autre.

Ces deux rayons de courbure R1, R2 confèrent à la paroi déflectrice 52 une forme bombée qui prolonge de manière artificielle la forme tubulaire de la tubulure 4.

Un premier rayon de courbure R1 s'étend depuis la première extrémité 53 de l'organe déflecteur 5 en direction d'une extrémité libre 54.

Un deuxième rayon de courbure R2 s'étend, quant à lui, perpendiculairement au premier rayon de courbure R1.

En outre, l'organe déflecteur 5 présente une casquette 55 destinée à venir en appui sur la face intérieure de la tubulure 4.

Cette casquette 55, située au niveau de la première extrémité 53, forme ainsi une butée en rotation de l'organe déflecteur 5 dans la tubulure 4, ce qui permet de compléter le maintien de l'organe déflecteur 5 à l'intérieur de la tubulure 4.

Cette casquette 55 est avantageusement située au niveau de la première extrémité 53, dans le prolongement de la paroi déflectrice 52.

Plus particulièrement, la paroi déflectrice 52 et la casquette 55 forment ensemble une cassure permettant, par le positionnement de la casquette 55 à l'intérieur de la tubulure 4, que la paroi déflectrice 52 affleure avec le premier orifice 41, ou quasiment.

Ainsi, l'organe déflecteur 5 ne forme pas de marche ou de saillie dans l'écoulement du flux d'eau à l'intérieur de la tubulure 4.

En effet, une telle saillie peut générer une retenue de matière (par exemple des saletés) qui, en l'absence d'une maintenance préventive régulière, peut entraîner un bouchage ou, à tout le moins, une obstruction au moins partielle au passage de l'eau usée s'écoulant dans la tubulure 4, ce qui provoque alors une difficulté dans l'évacuation de l'eau usée hors de l'équipement sanitaire 2.

En s'éloignant de la première extrémité 53, un jambage 56 fait saillie de la paroi déflectrice 52.

Ce jambage 56 permet de maintenir en position l'organe déflecteur 5 dans la tubulure, notamment pour éviter que la pression exercée par l'écoulement des eaux usées ne provoque son déplacement, et donc un risque que l'eau usée n'atteigne le deuxième orifice 42.

Le jambage 56 se présente sous une forme annulaire ayant moins une partie complémentaire de forme à la tubulure 4.

Le jambage 56 comprend également au moins une ailette 57, et de préférence une pluralité d'ailettes 57 (figure 3).

La ou chaque ailette 57 s'étend depuis la paroi déflectrice 52 jusqu'à une arche 58.

Le jambage 57, grâce à son arche 58, présente une forme circulaire, lui permettant de venir au contact de la paroi interne de la tubulure 4 pour maintenir un écartement entre ladite tubulure 4 et la paroi déflectrice 52, cela afin de permettre l'insertion d'air dans l'eau s'écoulant à l'intérieur de la tubulure 4.

Pour cela, le bouchon 6 est avantageusement du type à clapet.

Tel qu'illustré sur la vue en coupe longitudinale de la figure 1, le bouchon 6 comprend une coque 61 formant bouchon hermétique du deuxième orifice 42, et une soupape 62 montée mobile sur la coque 61 et pouvant adopter une première position d'entrée d'air et une deuxième position d'obturation.

Plus particulièrement, dans sa position d'obturation, la soupape 62 se trouve au contact de la coque 61, de sorte à empêcher le passage d'un fluide de part et d'autre du bouchon 6, et notamment de part et d'autre de la coque 61.

En revanche, dans sa position d'entrée d'air, la soupape 62 se trouve écartée de la coque 61 pour permettre à un fluide, notamment de l'air, de traverser le bouchon 6 à clapet, et plus précisément la coque 61, et permettre à un air extérieur à la tubulure 4 de pénétrer dans celle-ci.

Des moyens de rappel 63 en position d'obturation du clapet sont notamment intégrés dans le bouchon 6 à clapet, de sorte qu'en l'absence d'une dépression à l'intérieur de la tubulure 4, la soupape 62 conserve sa position d'obturation et empêche les mauvaises odeurs de sortir hors de la tubulure 4 par le bouchon 6 à clapet.

En revanche, en cas de dépression à l'intérieur de la tubulure 4, la soupape 62 adopte sa position de passage d'air pour permettre à un air extérieur de pénétrer à l'intérieur de la tubulure 4, évitant ainsi un désiphonage et permettant alors un bon écoulement des eaux usées dans la tubulure 4.

Selon un mode de réalisation non illustré sur les figures, le deuxième orifice 42 et le troisième orifice 43 peuvent être couplés à une colonne d'évacuation, le premier orifice 41 devenant alors un point d'entrée dans ladite colonne d'eaux usées.

Lors de l'installation du dispositif 1 de raccordement selon l'invention, un installateur raccorde le premier orifice 41 de la tubulure 4 à l'équipement sanitaire 2 puis le troisième orifice 43 à la canalisation 3.

L'installateur insère ensuite l'organe déflecteur 4 dans la tubulure 4 via le deuxième orifice 42 jusqu'à ce que le cerclage 511 de la partie de butée 51 ou le jambage 56 ne vienne se loger dans un épaulement 431 de la tubulure 4.

Le jambage 56, et plus précisément son arche 58, est alors au contact de l'intérieur de la tubulure 4 afin que la paroi déflectrice 52 soit convenablement orientée.

L'installateur peut alors mettre en place le bouchon 6 à clapet pour permettre de maintenir en position l'organe déflecteur 5 en bonne position.

En effet, comme cela est visible sur la figure 1, le bouchon 6 est en appui contre la casquette 55 de sorte que l'organe déflecteur 5 soit maintenu sur l'épaulement 431.

En référence à la figure 2, le montage de l'organe déflecteur 5 dans la tubulure 4 peut être réversible.

Autrement dit, le deuxième orifice 42 et le troisième orifice 43 peuvent être intervertis, l'orientation de l'organe déflecteur 5 étant modifiée en conséquence. Le dispositif 1 de raccordement qui vient d'être décrit permet de pouvoir être adapté à une pluralité de canalisations 3 et d'équipements sanitaires 2.

En effet, par l'intégration d'un organe déflecteur 5 dans la tubulure 4, il est possible de transformer un raccordement initialement horizontal en un raccordement coudé.

Par ailleurs, par l'utilisation d'un bouchon 6 à clapet, il est possible de d'améliorer l'évacuation des eaux usées depuis l'équipement sanitaire 1. En effet, l'insertion d'air dans la tubulure 4 permet d'éviter tout risque de désiphonage et donc tout risque de bouchage de la tubulure 4.

## Revendications

1. Dispositif de raccordement (1) d'un équipement sanitaire (2) à une canalisation (3), le dispositif (1) comprenant une tubulure (4) en forme de T, présentant :
- un premier orifice (41) ;
- un deuxième orifice (42) ;
- un troisième orifice (43) débouchant dans la tubulure (4) entre le premier orifice (41) et le deuxième orifice (42),
dans lequel le dispositif (1) comprend un organe déflecteur (5) destiné à être monté dans la tubulure (4), et comprenant :
- une partie de butée (51),
- une paroi déflectrice (52) prolongeant la partie de butée (51) et pénétrant dans la tubulure (4), la paroi déflectrice (52) formant un guide d'écoulement d'eau provenant de l'équipement sanitaire (2) depuis le premier orifice (41) uniquement, vers le troisième orifice (43)
**caractérisé en ce que** l'organe déflecteur (5) présente un jambage (56) faisant saillie de la paroi déflectrice (52) et venant en appui contre une paroi de la tubulure (4).

2. Dispositif (1) selon la revendication 1, **caractérisé en ce que** la tubulure (4) présente un épaulement (431) de réception de la partie de butée (51) de l'organe déflecteur (5).

3. Dispositif (1) selon l'une quelconque des revendications précédentes, **caractérisé en ce que** la partie de butée (51) de l'organe déflecteur (5) est ajourée pour autoriser un passage d'air.

4. Dispositif (1) selon l'une quelconque des revendications précédentes, **caractérisé en ce que** l'organe déflecteur (5) est configuré pour maintenir écartée la paroi déflectrice (52) de la tubulure (4).

5. Dispositif (1) selon la revendication précédente, **caractérisé en ce que** le jambage (56) se présente sous une forme annulaire présentant au moins une partie complémentaire de forme à la tubulure (4).

6. Dispositif (1) selon l'une quelconque des revendications précédentes, **caractérisé en ce qu'**il comprend un bouchon (6) pour obturer le deuxième orifice (42).

7. Dispositif (1) selon la revendication précédente, **caractérisé en ce que** le bouchon (6) présente une entrée d'air.

8. Dispositif (1) selon la revendication précédente, **caractérisé en ce que** le bouchon (6) comprend une soupape (62) souple formant clapet d'obturation de l'entrée d'air.

9. Dispositif (1) selon l'une quelconque des revendications précédentes, **caractérisé en ce que** la paroi déflectrice (52) présente une concavité tournée vers l'intérieur de la tubulure (4).

10. Dispositif (1) selon la revendication précédente, **caractérisé en ce que** la cavité de la paroi déflectrice (52) est formée par au moins deux rayons de courbure (R1, R2) perpendiculaires l'un par rapport à l'autre

## Patentansprüche

1. Anschlussvorrichtung (1) für eine Sanitäreinrichtung (2) an eine Kanalisation (3), wobei die Vorrichtung (1) ein T-förmiges Rohr (4) umfasst, das Folgendes aufweist:
- eine erste Öffnung (41);
- eine zweite Öffnung (42);
- eine dritte Öffnung (43), die zwischen der ersten Öffnung (41) und der zweiten Öffnung (42) in das Rohr (4) mündet,
wobei die Vorrichtung (1) ein Ablenkelement (5) umfasst, das dazu bestimmt ist, in dem Rohr (4) montiert zu werden, und Folgendes umfasst:
- ein Anschlagteil (51),
- eine Ablenkwand (52), die das Anschlagteil (51) verlängert und in das Rohr (4) eindringt, wobei die Ablenkwand (52) eine Führung für den Wasserfluss bildet, der von der Sanitäreinrichtung (2) nur aus der ersten Öffnung (41) zur dritten Öffnung (43) kommt, **dadurch gekennzeichnet, dass** das Ablenkelement (5) einen Schenkel (56) aufweist, der von der Ablenkwand (52) vorsteht und an einer Wand des Rohrs (4) in Anlage kommt.

2. Vorrichtung (1) nach Anspruch 1, **dadurch gekennzeichnet, dass** das Rohr (4) eine Schulter (431) zur Aufnahme des Anschlagteils (51) des Ablenkelements (5) aufweist.

3. Vorrichtung (1) nach einem der vorhergehenden Ansprüche, **dadurch gekennzeichnet, dass** das Anschlagteil (51) des Ablenkelements (5) perforiert ist, um den Durchtritt von Luft zu ermöglichen.

4. Vorrichtung (1) nach einem der vorhergehenden Ansprüche, **dadurch gekennzeichnet, dass** das Ablenkelement (5) dazu eingerichtet ist, die Ablenkwand (52) des Rohrs (4) auseinanderzuhalten.

5. Vorrichtung (1) nach dem vorhergehenden Anspruch, **dadurch gekennzeichnet, dass** der Schenkel (56) ringförmig ist und mindestens ein Teil aufweist, das in seiner Form komplementär zum Rohr (4) ist.

6. Vorrichtung (1) nach einem der vorhergehenden Ansprüche, **dadurch gekennzeichnet, dass** sie einen Stöpsel (6) zum Verschließen der zweiten Öffnung (42) umfasst.

7. Vorrichtung (1) nach dem vorhergehenden Anspruch, **dadurch gekennzeichnet, dass** der Stöpsel (6) einen Lufteinlass aufweist.

8. Vorrichtung (1) nach dem vorhergehenden Anspruch, **dadurch gekennzeichnet, dass** der Stöpsel (6) ein flexibles Ventil (62) umfasst, das eine Verschlussklappe für den Lufteinlass bildet.

9. Vorrichtung (1) nach einem der vorhergehenden Ansprüche, **dadurch gekennzeichnet, dass** die Ablenkwand (52) eine Konkavität aufweist, die zur Innenseite des Rohrs (4) gerichtet ist.

10. Vorrichtung (1) nach dem vorhergehenden Anspruch, **dadurch gekennzeichnet, dass** der Hohlraum der Ablenkwand (52) durch mindestens zwei zueinander senkrechte Krümmungsradien (R1, R2) gebildet wird.

## Claims

1. A device (1) for connecting sanitary equipment (2) to a pipe (3), the device (1) comprising a T-shaped fitting (4), having:
- a first opening (41);
- a second opening (42);
- a third opening (43) opening into the fitting (4) between the first opening (41) and the second opening (42),
wherein the device (1) comprises a deflector member (5) intended to be mounted in the fitting (4), and comprising:
- a stop portion (51),
- a deflecting wall (52) extending the stop portion (51) and penetrating into the fitting (4), the deflecting wall (52) forming a guide for the flow of water coming from the sanitary equipment (2) from the first opening (41) alone, towards the third opening (43)
**characterised in that** the deflector member (5) has a leg (56) projecting from the deflecting wall (52) and bearing against a wall of the fitting (4).

2. The device (1) according to claim 1, **characterised in that** the fitting (4) has a shoulder (431) for receiving the stop portion (51) of the deflector member (5).

3. The device (1) according to any one of the preceding claims, **characterised in that** the stop portion (51) of the deflector member (5) is apertured to enable the passage of air.

4. The device (1) according to any one of the preceding claims, **characterised in that** the deflector member (5) is configured to keep the deflecting wall (52) away from the fitting (4).

5. The device (1) according to the preceding claim, **characterised in that** the leg (56) is annular shaped having at least one portion complementary to the shape of the fitting (4).

6. The device (1) according to any one of the preceding claims, **characterised in that** it comprises a plug (6) to seal the second opening (42).

7. The device (1) according to the preceding claim, **characterised in that** the plug (6) has an air inlet.

8. The device (1) according to the preceding claim, **characterised in that** the plug (6) comprises a flexible valve (62) forming a shutter for sealing the air inlet.

9. The device (1) according to any one of the preceding claims, **characterised in that** the deflecting wall (52) has a concavity facing the inside of the fitting (4).

10. The device (1) according to the preceding claim, **characterised in that** the cavity of the deflecting wall (52) is formed by at least two radii of curvature (R1, R2) perpendicular to each other.
